**Europäisches Patentamt**

**European Patent Office**

**Office européen des brevets**

(11) Publication number: **0 237 283**
**A2**

## (12) EUROPEAN PATENT APPLICATION

(21) Application number: **87301938.4**

(22) Date of filing: **05.03.87**

(51) Int. Cl.³: **H 04 N 15/00**
**G 02 B 26/00**

(30) Priority: **13.03.86 US 839318**

(43) Date of publication of application:
**16.09.87 Bulletin 87/38**

(84) Designated Contracting States:
**DE FR GB**

(71) Applicant: **TEKTRONIX, INC.**
**Tektronix Industrial Park D/S Y3-121 4900 S.W. Griffith
Drive P.O. Box 500
Beaverton Oregon 97077(US)**

(72) Inventor: **DeHoff, Richard J.
15595 S.W. Bridle Hills Drive
Beaverton, Oregon 97007,(US)**

(74) Representative: **Lawrence, Malcolm Graham et al,
Malcolm Lawrence & Co. 9th Floor Terminus House
Terminus Street
Harlow Essex CM20 1XF(GB)**

(54) Stereoscopic multicoloured image projection system with passive viewing apparatus.

(57) A stereoscopic image projection system (10) employs an image encoder and an image decoder that are separated by a transmission medium (64) having a nondepolarizing projection surface (66) of the reflecting type positioned within it. The image encoder comprises plural color cathode ray tubes (12, 14, 16) and an equal number of variable optical retarders (36, 46, 52). Each variable optical retarder is positioned to receive from a different cathode ray tube first and second perspective view images carried on light rays of orthogonally related polarization states. Each cathode ray tube emits light of a color which is different from that emitted by the other cathode ray tubes. The image decoder comprises only passive optical elements. In a preferred embodiment, the imaging system uses three variables optical retarders to encode in red, green, and blue the first and second perspective view images by selectively developing, respectively, zero and half-wave retardation of light passing through them. A passive viewing apparatus employs two neutral linear polarizing filters (68, 70) with orthogonally related absorption axes that receive the light reflecting off the screen. The polarizing filters pass light of a different one of the polarization states, and thereby pass a different one of the first and second perspective view images of multi-coloured aspect.

F I G. I

## STEREOSCOPIC MULTICOLORED IMAGE PROJECTION SYSTEM WITH PASSIVE VIEWING APPARATUS

### Technical Field

The present invention relates to imaging systems, and in particular, a stereoscopic image projection system that employs a passive viewing apparatus in optical association with plural colored image sources. Each such image source cooperates with one of an equal number of variable optical retarders to alternately transmit and block a perspective view image of a scene for each eye of an observer to create the visual effect of a three-dimensional multicolored image of the scene.

### Background of the Invention

Variable optical retarders have been employed heretofore in stereoscopic imaging systems. For example, the article by Roese and Khalafalla, "Stereoscopic Viewing With PLZT Ceramics," Ferroelectrics, Vol. 10 (1976), pp. 47-51, describes a stereoscopic viewing system that employs lead lanthanum zirconate titanate (PLZT) ferroelectric ceramics. The stereoscopic viewing system comprises a pair of PLZT devices that form the eyepieces of glasses worn by an observer. Each such device is positioned in front of one of the observer's eyes and includes an optically cemented assembly of antireflective coated glass, a front polarizer, the PLZT ceramic wafer, and a rear polarizer. A switchable power source selectively applies 0 volts and 500 volts to each PLZT device to change its birefringence and thereby change the direction of polarization of light incident on it. Changing the polarization direction of light by the PLZT device causes either the transmission or the extinction of light carrying the image before it reaches the observer's eyes.

On page 49, the article states that the imaging system would be inoperable if the front polarizer of the PLZT device assembly were removed and a polarizing sheet were placed on the screen of the imaging source. The reason is that the resulting imaging system would have a very narrow field of view because of a degradation in optical contrast ratio as the viewing angle changes from the normal to the rear polarizer surface.

The viewing system described by Roese et al. can also present a safety problem in that it requires the use of a viewing device to which a relatively high voltage is applied and which is worn by the observer.

The article by M.G. Maxwell, "Three-Dimensional Color Television," SMPTE Journal (August 1985), pp. 821-825 describes a three-dimensional color television system that employs in front of a conventional television camera left- and right-hand lenses that are spaced apart to simulate the left and right eyes of an observer. Optical switches positioned in front of the camera alternately transmit to it an image from the left-hand lens during even fields and the image from the right-hand lens during odd fields. At a receiver, a liquid crystal screen polarizes the light carrying the images vertically and horizontally during even and odd fields, respectively. A viewer wears passive glasses having one lens that passes only the odd field image in horizontally polarized light and only the even field image in vertically polarized light. The Maxwell system suffers from the disadvantage of requiring external optical components to provide the left and right eye image convergence.

The article by Balasubramonian and Gunasekaran, "On the Merits of Bicircular Polarization for Stereo Color TV," IEEE Transactions on Consumer Electronics, Vol. CE-28, No. 4 (November 1982), pp. 638-650, describes a three-dimensional viewing system based on the use of left- and right-circularly polarized light for carrying images that emanate from the screens of two color cathode ray tubes. The color cathode ray tubes present together left and right perspective view images of a scene. A neutral linear polarizing filter and a fixed quarter-wave plate are positioned in front of the screen of each cathode ray tube. The optic axes of the quarter-wave plates are parallel to each other, and the transmission axes of the polarizing filters are perpendicular to each other. The perspective view images propagate in left-circularly polarized light from one cathode ray tube and in right-circularly polarized light from the other cathode ray tube.

The imaging system employs a passive viewing device comprising two eyepieces, each including a quarter-wave plate and a neutral linear polarizer to remove the circular polarization and transmit the left view image to the left eye and the right view image to the right eye. The optic axes of the quarter-wave plates are parallel to each other and parallel to the optic axes of the quarter-wave plates positioned in front of the cathode ray tube screens. The neutral linear polarizers have orthogonally aligned absorption axes. The article states that the use of left- and right-circular polarization provides three-dimensional perception that is unrestricted by the observer's head movements.

The system of Balasubramonian et al. suffers from the disadvantage of requiring separate cathode ray tubes to provide the respective left and right perspective view images in developing a stereoscopic image of the scene.

U.S. Patent No. 4,281,341 of Byatt describes a receiver in a stereoscopic television system that employs a twisted nematic liquid crystal cell to change the polarization direction of light carrying perspective view images emanating in field sequential format from a cathode ray tube. The twisted nematic device is positioned downstream of a linear polarizing filter which is positioned in front of the screen of the cathode ray tube and which has its transmission axis oriented in the vertical direction. An observer wearing passive glasses with two eyepieces, each comprising a neutral polarizing filter. The polarization axes of the neutral polarizing filters are orthogonally aligned, with one of them aligned parallel to the polarizing filter positioned in front of the cathode ray tube screen.

The Byatt system suffers from the disadvantage of requiring the application of a relatively high voltage to the twisted nematic cell to change rapidly the polarization direction of the light carrying the perspective view images. Use of such a device at slow switching speeds causes image flicker, and use of a slow device at relatively high switching speeds develops a low contrast image.

### Summary of the Invention

An object of this invention is, therefore, to provide a stereoscopic image projection system that is operable to develop multicolored three-dimensional images.

Another object of this invention is to provide such a system that employs an image encoder which includes plural colored image sources in cooperation with an equal number of variable optical retarders and an image decoder which includes only passive optical elements.

A further object of this invention is to provide such an imaging system that is operable to develop a large image with enchanced depth perception.

Still another object of this invention is to provide such an imaging system that promotes right and left eye image convergence without a need for external hardware or circuitry.

Yet another object of this invention is to provide such an imaging system whose perspective view images appear in field sequential format with high image contrast at switching speeds greater than the flicker rate.

Additional objects and advantages of the present invention will be apparent from the following detailed description of a preferred embodiment thereof, which proceed with reference to the accompanying drawings.

## Brief Description of the Drawings

FIG. 1 is a diagram of a preferred embodiment of a stereoscopic multicolored image projection system of the present invention.

FIG. 2 is a diagrammatic cross-sectional side elevation view of the liquid crystal cell that is used as a variable optical retarder in a preferred embodiment of the present invention.

FIGS. 3A and 3B are schematic diagrams of the director alignment configuration of the liquid crystal cell of the variable optical retarders incorporated in a preferred embodiment of the present invention in, respectively, the "ON" state and the "OFF" state.

## Detailed Description of Preferred Embodiment

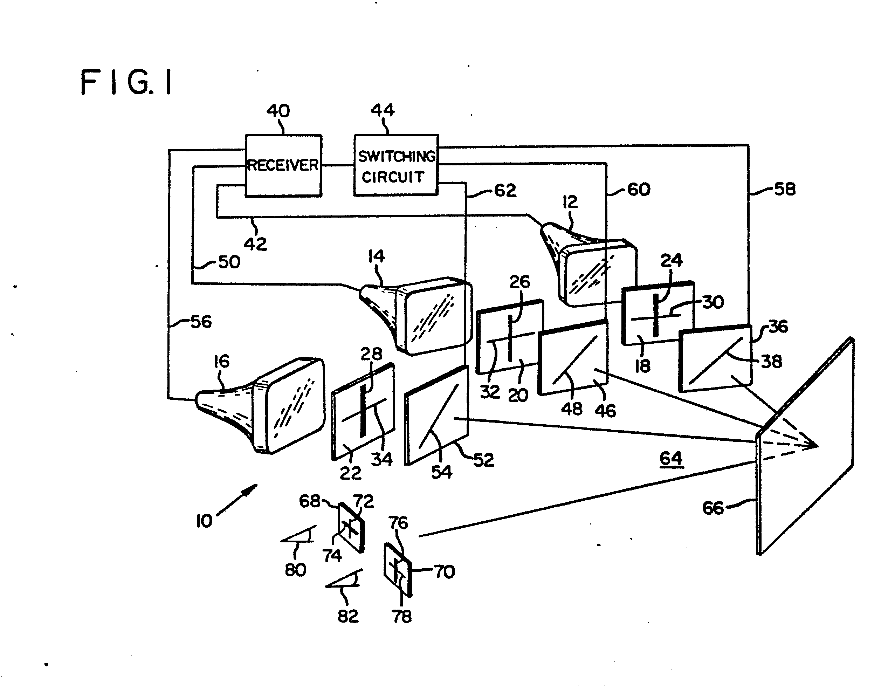

With reference to Fig. 1, stereoscopic image projection system 10 includes three light sources 12, 14, and 16 of which each comprises, for example, a cathode ray tube. Each of light sources 12, 14, and 16 emits image field information in a different color and produces in alternate sequence first and second perspective view images of a scene. In a preferred embodiment, light sources 12, 14, and 16 emit image field information in, respectively, red, green, and blue light. A set of first polarizing filters 18, 20, and 22 are disposed face-to-face with the screens of the respective cathode ray tubes 12, 14, and 16 to polarize in a predetermined polarization state the light rays that emanate from them. Polarizing filters 18, 20, and 22 are neutral linear polarizers with respective vertical absorption axes 24, 26, and 28 and respective horizontal transmission axes 30, 32, and 34.

The light rays carrying the first and second perspective view images in the color red exit polarizing filter 18 through its transmission axis 30 and strike a variable optical retarder 36, which is tuned to provide half-wave retardation for red light. The optic axis 38 of variable optical retarder 36 is disposed at substantially 45° angles with respect to polarization axes 24 and 30 of polarizing filter 18. A receiver 40 delivers from its output 42 to cathode ray tube 12 red image field information corresponding to the first and second perspective views of the scene and provides signals to a switching circuit 44 in synchronism with the delivery of such information.

The light rays carrying the first and second perspective view images in the color green exit polarizing filter 20 through its transmission axis 32 and strike a variable optical retarder 46, which is tuned to provide half-wave retardation for green light. The optic axis 48 of variable optical retarder 46 is disposed at substantially 45° angles with respect to polarization axes 26 and 32 of polarizing filter 20. Receiver 40 delivers from its output 50 to cathode ray tube 14 green image field information corresponding to the first and second perspective views of the scene and provides signals to a switching circuit 44 in synchronism with the delivery of such information.

The light rays carrying the first and second perspective view images in the color blue exit polarizing filter 22 through its transmission axis 34 and strike a variable optical retarder 52, which is tuned to provide half-wave retardation for blue light. The optic axis 54 of variable optical retarder 52 is disposed at substantially 45° angles with respect to polarization axes 28 and 34 of polarizing filter 22. A receiver 40 delivers from its output 56 to cathode ray tube 16 blue image field information corresponding to the first and second perspective views of the scene and provides signals to a switching circuit 44 in synchronism with the delivery of such information.

Switching circuit 44 has outputs 58, 60, and 62 which apply first and second switching signals to the respective variable optical retarders 36, 46, and 52. The first and second switching signals are selectively applied to each one of variable optical retarders 36, 46, and 52 to develop, respectively, first and second amounts of optical retardation. The first switching signal causes variable optical retarders 36, 46, and 52 to provide essentially zero retardation in a field-aligned or "ON" state to transmit horizontally polarized light rays of the first image. The second switching signal causes variable optical retarders 36, 46, and 52 to provide substantially half-wave retardation in a partly relaxed or "OFF" state to transmit vertically polarized light rays of the second image.

Polarizing filters 18, 20, and 22 and variable optical retarders 36, 46, and 52 constitute an image encoding means that encodes the first image in light of a first polarization sense (i.e., horizontal polarization) and the second image in light of a second polarization sense (i.e., vertical polarization). The light rays of the colors red, green, and blue exiting the respective variable optical retarders 36, 46, and 52 propagate through a transmission medium 64, such as air, and strike a nondepolarizing projection screen or surface 66 of the reflecting type. One example of such a nondepolarizing screen is an Ektalite brand projection screen manufactured by Eastman Kodak Co. It will be appreciated, however, that the present invention can operate as a rear projection system with a semi-transparent nondepolarizing projection screen. A lens system (not shown) of known design positioned between variable optical retarders 36, 46, and 52 and projection surface 66 serves to project the first and second images in full color onto projection surface 66.

The images appearing on projection surface 66 are visible to an observer who is positioned on the same side of projection surface 66 as that which the images strike. The first and second images also strike first and second viewing means 68 and 70, which are positioned alongside of each other and form the eyepieces for glasses that are worn by an observer. First viewing means 68 comprises a second neutral linear polarizing filter having a vertical transmission axis 72 and a horizontal absorption axis 74, and second viewing means 70 comprises a third neutral linear polarizing filter having a vertical absorption axis 76 and a horizontal transmission axis 78.

Whenever variable optical retarders 36, 46, and 52 provide essentially zero retardation in the "ON" state, the horizontally polarized light rays carrying the first image in red, green, and blue propagate through transmission medium 64, reflect off projection screen 66, and strike polarizing filters 68 and 70. Absorption axis 74 of polarizing filter 68 blocks the first image from the observer's left eye 80, and transmission axis 78 of polarizing filter 70 transmits the first image to the observer's right eye 82.

Whenever variable optical retarders 36, 46, and 52 provide approximately half-wave retardation in the "OFF" state, the vertically polarized light rays carrying the second image in red, green, and blue propagate through transmission medium 64, reflect off projection screen 66, and strike polarizing filters 68 and 70. Transmission axis 72 of polarizing filter 68 transmits the second image to the observer's left eye 80, and absorption axis 76 of polarizing filter 70 blocks the second image from the observer's right eye 82. There is complete extinction of the second image from right eye 84 because each one of variable optical retarders 36, 46, and 52 is tuned to provide half-wave retardation of the color of light passing through it. Each of the polarization directions of red, green, and blue light rays rotates, therefore, 90° when the variable optical retarders are in the OFF state.

Polarizing filters 68 and 70 constitute an image decoding means that presents the first and second images to the observer's right eye 82 and left eye 80, respectively. Alternately blocking and transmitting the perspective view image for each eye creates the visual effect of a three-dimensional image of the scene.

It will be appreciated that a potentially large image can be created by the above-described projection technique, thereby allowing the observer to view the display from relatively long distances. By facilitating 0237283 viewing from longer distances, one can employ a greater angular offset of the left eye and right eye perspective views and thereby obtain greater depth perception without causing observer eye strain.

The preferred embodiment of the present invention incorporates three liquid crystal cells operating as variable optical retarders 36, 46, and 52 that control the retardation of light passing therethrough in response to the intensity of an electric field produced by an excitation voltage applied to the electrode structures of the cells. Each of the three liquid crystal cells is capable of switching from the ON state to the OFF state in relatively short transition times of about 3 milliseconds.

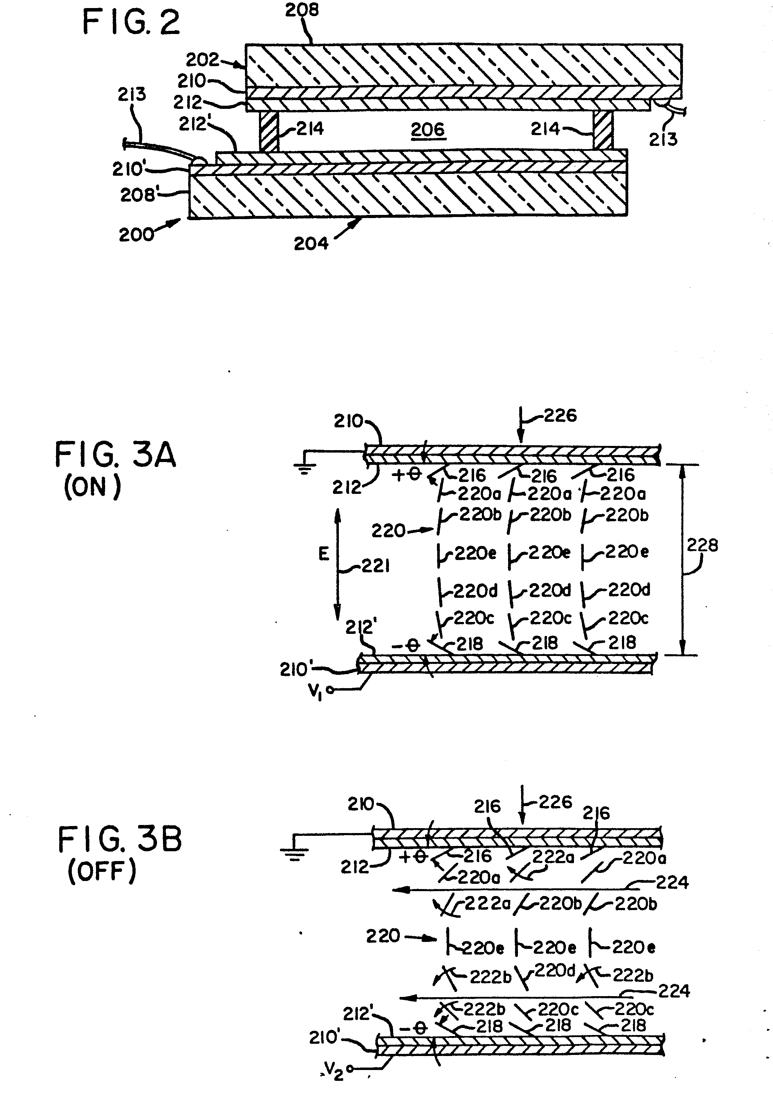

With reference to Fig. 2, liquid crystal cell 200 includes a pair of generally parallel, spaced-apart electrode structures 202 and 204 with nematic liquid crystal material 206 captured between them. Electrode structure 202 comprises glass dielectric substrate 208 that has on its inner surface a layer 210 of electrically conducting, but optically transparent, material such as indium tin oxide. Director alignment film layer 212 is applied to conductive layer 210 and forms a boundary between electrode structure 202 and liquid crystal material 206. The surface of film 212 which contacts the liquid crystal material is conditioned in accordance with one of two preferred methods to promote a preferred orientation of the directors of the liquid crystal material in contact therewith. The materials constituting and the corresponding methods of conditioning the director alignment film 212 are described in detail hereinbelow. Electrode structure 204 is of a construction similar to that of electrode structure 202, and the components corresponding to those of electrode structure 202 are shown with identical reference numerals followed by primes.

The short length edges of electrode structures 202 and 204 are offset relative to each other to provide access to conductive layers 210 and 210' for connecting at terminals 213 the output conductors of switching circuit 44. Spacers 214 may be comprised of any suitable material such as glass fiber to preserve the general parallel relation between electrode structures 202 and 204.

With reference to Figs. 3A and 3B, the nematic director alignment configuration of layers 212 and 212' in liquid crystal cell 200 is described in Column 7, lines 48-55 of U.S. Patent No. 4,333,708 of Boyd, et al. It will be understood, however, that the liquid crystal cell described in the Boyd, et al. patent differs from that used in the present invention in that the former includes an alternating-tilt geometry type configuration of which the director alignment of cell 200 comprises only a portion. The cell of the Boyd, et al. patent is constructed to promote disclination movement within the cell in an attempt to provide a bistable switching device.

The film layer 212 of electrode structure 202 is conditioned so that the electrode structure surface contacting directors 216 are aligned parallel to each other at a tilt bias angle + θ, which is measured in the counterclockwise sense with reference to the surface of film layer 212. The film layer 212' of electrode structure 204 is conditioned so that the electrode structure surface contacting directors 218 are aligned parallel to each other at a tilt bias angle - θ, which is measured in the clockwise sense with reference to the surface of film layer 212'. Thus, liquid crystal cell 200 is fabricated so that the surface contacting directors 216 and 218 of the opposed surfaces of director alignment layers 212 and 212' of electrode structures 202 and 204, respectively, are tilt-biased in opposite directions.

A first preferred method of effecting the desired alignment of the surface contacting directors entails the use of polyimide as the material that comprises the alignment film layers 212 and 212' on electrode structures 202 and 204, respectively. Each alignment film layer is rubbed to produce a tilt bias angle |θ|, with 2° to 5° being the preferred range. A second preferred method of effecting the desired alignment of the surface contacting directors entails the use of silicon monoxide as the material which comprises the alignment film layers 212 and 212' of electrode structures 202 and 204, respectively. The silicon monoxide layer is evaporated and vapor deposited preferably at a 5° angle measured from the electrode structure surface in an amount sufficient to produce a tilt bias angle $|\theta|$ of between 10° to 30°, with 15° to 25° being the preferred range.

It will be appreciated that methods for depositing silicon monoxide or other alignment materials to align liquid crystal molecules in a predetermined direction have been disclosed previously by others and are known to those having ordinary skill in the art. One such method, for example, is disclosed in U.S. Patent No. 4,165,923 of Janning.

Fig. 3A depicts the orientation of surface noncontacting directors 220 when an AC signal $V_1$ of approximately 2 kHz and 20 Vrms is applied to conductive layers 210 and 210' of electrode structures 202 and 204, respectively. The signal $V_1$ on conductive layer 210' with conductive layer 210 grounded constitutes a first switching state produced at an output of switching circuit 44 and produces an alternating electric field, E, between electrode structures 202 and 204 within the liquid crystal cell 200 to force the cell into its "ON" optical retardation state. A substantial number of the surface noncontacting directors 220 of a liquid crystal material 206 that has a positive anisotropy value align essentially end-to-end along direction 221 of the electric field flux lines within the cell, which direction is normal to the conditioned surfaces of the electrode structures. Thus, when cell 200 is excited into its "ON" state, the surface noncontacting directors 220 are aligned perpendicularly to the surfaces of the cell.

Fig. 3B depicts the orientation of surface noncontacting directors 220 after the signal $V_1$ is removed so that the alignment of surface noncontacting directors is influenced not by an electric field produced between electrode structures 202 and 204 within the cell, but by the intermolecular elastic forces which cause relaxation of the surface noncontacting directors from the end-to-end alignment of the "ON" state. The removal of signal $V_1$ constitutes a second switching state produced at an output of switching circuit 44. The director orientation shown in Fig. 3B corresponds to that of "OFF" optical retardation state of the cell.

Switching cell 200 to the "OFF" state can also e accomplished by applying to layer 210' of the cell an AC signal $V_2$ produced at the output of switching circuit 44 having a voltage level which is less than that of signal $V_1$ and generally near 0 V. The frequency of signal $V_2$ is generally the same as that of signal $V_1$.

During the transition from the "ON" state to the "OFF" state of the liquid crystal cell, the surface noncontacting directors recede from the end-to-end alignment normal to the electrode structure surfaces and attempt to assume a generally parallel relation with the adjacent directors. Thus, surface noncontacting directors 220a and 220b rotate in a clockwise sense as shown by direction arrows 222a in order to achieve a near-parallel relation as respects directors 216 and 220a, respectively; and surface noncontacting directors 220c and 220d rotate in a counterclockwise sense as shown by direction arrows 222b to achieve a near-parallel relation as respects directors 218 and 220c, respectively. Thus, when cell 200 relaxes to its "OFF" state, each one of a substantial number of the surface noncontacting directors is aligned so that it projects a director component onto the surfaces of the cell. The surface noncontacting directors, however, lie approximately in a plane which is perpendicular to the surfaces of the cell.

The method of operating the liquid crystal cell 200 as a variable optical retarder is directed to the disclination-free surface noncontacting director relaxation from the electric field aligned or "ON" state depicted by Fig. 3A to the planar configuration or "OFF" state depicted by Fig. 3B. In the present invention, liquid crystal cell 200 is operated as a zero to half-wave retarder whose optic axis corresponds to the alignment direction of the surface noncontacting directors 220.

Linearly polarized light which propagates in direction 226 normal to the surfaces of electrode structures 202 and 204 is coincident with the direction of surface noncontacting directors 220 when the liquid crystal cell is in the "ON" state. Directors 220 are oriented in such "ON" state so that there is a negligible protection of the optic axis on the electrode structure surfaces of the cell. Under these conditions, liquid crystal cell 200 produces substantially reduced optical retardation for incident light propagating in the direction 226.

Linearly polarized light which propagates in direction 226 normal to the surfaces of electrode structures 202 and 204 is noncoincident with the alignment direction of surface noncontacting directors when the liquid crystal cell is in the "OFF" state. Directors 220 are oriented in such "OFF" state so that each one of a substantial number of them projects a component on the electrode structure surfaces of the cell. Under these conditions, liquid crystal cell 200 has an effective birefringence for generally normally incident light.

In imaging system 10 of Fig. 1, the orientation of surface noncontacting directors 220 of each one of variable optical retarders 36, 46, and 52 provides essentially half-wave optical retardation for light of the wavelength which satisfies the mathematical expression:

$$\frac{\Delta n d}{\lambda} = 1/2$$

where d represents the thickness 228 and $\Delta n$ represents the effective birefringence of the cell.

It will be obvious to those having skill in the art that many changes may be made in the above-described details of the preferred embodiment of the present invention. The scope of the present invention, therefore, should be determined only by the following claims.

## CLAIMS

1. A stereoscopic multicolored image projection system, comprising:

plural light sources, each one of the light sources producing different views of a scene in a predetermined color field, the views produced by each light source including first and second images carried by light of a predetermined polarization state;

an image encoder and an image decoder that are separated by a transmission medium having a projection surface positioned within it,

the image encoder including plural variable optical retarders, each variable optical retarder being positioned to receive the light emitted from a different one of the light sources and being operable to selectively encode for transmission to the projection surface the first image in light of a first polarization state and the second image in light of a second polarization state, and

the image decoder receiving the first and second images transmitted to the projection surface and including first and second viewing means, the first viewing means comprising a first polarizing means for transmitting light of the first polarization state and blocking light of the second polarization state, and the second viewing means comprising a second polarizing means for transmitting light of the second polarization state and blocking light of the first polarization state, thereby selectively decoding the first and second images in many colors.

2. The system of claim 1 in which each light source has an input linear polarizing filter positioned to develop light of the predetermined polarization state, and the first viewing means comprises a first linear polarizing filter having orthogonally aligned transmission and absorption polarization axes and the second viewing means comprises a second linear polarizing filter having orthogonally aligned transmission and absorption polarization axes.

3. The system of claim 2 in which the absorption axes of the first and second linear polarizing filters are orthogonally aligned with respect to each other.

4. The system of claim 1 in which each variable optical retarder provides essentially zero retardation to develop light of the first polarization state and substantially half-wave retardation to develop light of the second polarization state.

5. The system of claim 4 in which each one of the variable optical retarders provides substantially half-wave retardation of the color of the image color field light it receives.

6. The system of claim 1 in which each one of the variable optical retarding means includes liquid crystal material which has directors and is captured between a pair of generally parallel electrode structures, each electrode structure including a director alignment layer which has been conditioned so that the directors of the liquid crystal material in contact therewith become substantially uniformly aligned to form tilt bias angles with the conditioned surfaces, the tilt bias angles of the directors in contact with one conditioned surface being defined in a rotational sense opposite to the tilt bias angles of the directors in contact with the other conditioned surface.

7. The system of claim 1 in which each one of the variable optical retarders provides substantially half-wave retardation of the color of the image color field light it receives.

0237283

FIG.I

RECEIVER

SWITCHING CIRCUIT

40 44 42 50 56 58 60 62

10 12 14 16 18 20 22 24 26 28 30 32 34 36 38 46 48 52 54 64 66 68 70 72 74 76 78 80 82

0237283

FIG. 2

FIG. 3A
(ON)

FIG. 3B
(OFF)